# EUROPEAN PATENT SPECIFICATION

(11) **EP 3 231 639 B1**
(45) Date of publication and mention of the grant of the patent: **29.01.2020**
(21) Application number: 17163590.7
(22) Date of filing: 29.03.2017
(51) Int. Cl.: B60C 11/12, B60C 11/03

(54) **PNEUMATIC TIRE**
LUFTREIFEN
PNEUMATIQUE

(30) Priority: 12.04.2016 JP 2016079756
(43) Date of publication of application: 18.10.2017
(73) Proprietor: Sumitomo Rubber Industries, Ltd., Kobe-shi, Hyogo-ken (JP)
(72) Inventor: HIGASHIURA, Kazuki, Kobe-shi, Hyogo 651-0072 (JP)
(74) Representative: Manitz Finsterwald Patent- und Rechtsanwaltspartnerschaft mbB

(56) References cited:
- EP-A1- 0 609 195
- EP-A1- 1 533 140
- EP-A1- 3 075 572
- DE-A1-102005 042 569
- DE-A1-102011 055 916
- JP-A- 2003 080 907

## Description

### Technical Field

The present invention relates to a pneumatic tire capable of exerting excellent on-ice and on-snow performance.

### Background Art

Japanese Patent Application Publication No. H06-278412 (Patent Literature 1) discloses a pneumatic tire provided with a plurality of oblique main grooves extending obliquely from tread edges toward the tire equator, and oblique land regions defined between the oblique main grooves adjacent in the tire circumferential direction. The oblique land regions are each divided into a shoulder block and a middle block by a vertical groove connecting between the adjacent oblique main grooves. Each of the shoulder blocks and the middle blocks is provided with transverse sipes extending in the tire axial direction. Such shoulder block and middle block are easy to deform in the same direction, and the direction of their sipes are limited to one direction. Therefore, it is difficult for such tire to exert sufficient edge effects by the edge components in every running condition from straight running to cornering especially on icy roads.

EP 1 533 140 A1 discloses a pneumatic tire having a tread portion provided with a plurality of oblique main grooves extending obliquely from tread edges toward the tire equator so as to define oblique land regions between the oblique main grooves adjacent in the tire circumferential direction. By a vertical groove connecting between the adjacent oblique main grooves, the oblique land regions are each divided into a shoulder block located axially outside the vertical groove and a middle block located axially inside the vertical groove. The shoulder block and the middle block are provided with a plurality of sipes forming a net composed of polygons.

JP 2003 080907 A discloses a similar pneumatic tire wherein the shoulder block and the middle block of land regions in the tread surface of the tire are provided with a plurality of sipes whose angles with respect to the tire axial direction are less than 45 degrees.

In EP 0 609 195 A1, a similar pneumatic tire is shown as well. The shoulder block and the middle block of land regions in the tread surface of the tire comprise small grooves and sipes being aligned perpendicularly with respect to the small grooves.

DE 10 2005 042 569 A1 discloses a similar pneumatic tire having sipes and microsipes within the shoulder block and the middle block of land regions in the tread surface. The microsipes are arranged perpendicularly with respect to the sipes.

Furthermore, DE 10 2011 055 916 A1 shows a similar pneumatic tire having connecting sipes between sipes of the shoulder block and the middle block in land regions of the tread surface.

### Summary of the invention

The present invention was made in view of the above, and a primary object thereof is to provide a pneumatic tire capable of exerting excellent on-ice/on-snow performance by providing shoulder blocks and middle blocks with sipes extending in different directions.

This object is achieved by a pneumatic tire having the features according to claim 1.

According to the present invention, the pneumatic tire comprises
a tread portion provided with a plurality of oblique main grooves extending obliquely from tread edges toward the tire equator so as to define oblique land regions between the oblique main grooves adjacent in the tire circumferential direction,
the oblique land regions each divided by a first vertical groove connecting between the adjacent oblique main grooves into a shoulder block located axially outside the first vertical groove and a middle block located axially inside the first vertical groove,
wherein
the above-said shoulder block is provided with a plurality of transverse sipes whose angles with respect to the tire axial direction are less than 45 degrees,
the above-said middle block is provided with a plurality of vertical sipes whose angles respect to the tire circumferential direction are less than 45 degrees,
each of the oblique land regions is provided with a second vertical groove connecting between the adjacent oblique main grooves and positioned between the first vertical groove and the tire equator so as to define a crown block on the axially inside of the second vertical groove, and
the crown block comprises an axially inner portion having a transverse edge extending substantially in the tire axial direction, and a pair of oblique edges extending from both ends of the transverse edge obliquely so that an axial width between the oblique edges gradually increases toward one side in the tire circumferential direction.

Further, the pneumatic tire according to the present invention may have the following features:
(1) the transverse sipes in the above-said shoulder block each have two ends, one end of which is connected with the above-said first vertical groove, and the other end of which is terminated at a position axially inside the adjacent tread edge;
(2) the above-said shoulder block has a buttress surface which extends axially outwardly from the tread edge, and in which a buttress transverse groove is disposed;
(3) the above-said buttress transverse groove extends in the tire axial direction in a center part of the shoulder block in the tire circumferential direction;
(4) the middle block is provided with a middle narrow groove, one end of which is connected with one of the oblique main grooves and the other end of which terminates within the middle block;
(5) the crown block is provided with a crown narrow groove one end of which is connected with one of the oblique main grooves and the other end of which terminates within the crown block;
(6) the above-said crown block is provided with a plurality of transverse sipes whose angles with respect to the tire axial direction are less than 45 degrees;
(7) the angles of the transverse sipes with respect to the tire axial direction are in a range between 10 and 30 degrees, and the angles of the vertical sipes with respect to the tire circumferential direction range are in a range between 25 and 40 degrees;
(8) in each of the oblique land regions, the above-said first vertical groove and the above-said second vertical groove are inclined with respect to the tire circumferential direction to the same direction, and the inclination angle of the second vertical groove with respect to the tire circumferential direction is larger than the inclination angle of the first vertical groove with respect to the tire circumferential direction.

In addition, the pneumatic tire may further comprise:
the tread portion being provided on each side of the tire equator with the oblique land regions defined as extending from a tread edge toward the tire equator while curving toward one tire circumferential direction, wherein each of the oblique land regions is provided in its axially inner portion with a protruding part extending axially of the tire beyond the tire equator, whereby, on the tire equator, the protruding part of the oblique land regions on one side of the tire equator alternate with the protruding part of the oblique land regions on the other side of the tire equator,
   wherein
the above-said axially inner crown block includes the above-said protruding part,
the above-said axially inner crown block is provided with a plurality of transverse sipes 17 whose angles with respect to the tire axial direction are less than 45 degrees or alternatively more than 45 degrees.

In this application including specification and claims, various dimensions, positions and the like of the tire refer to those under a normally inflated unloaded condition of the tire unless otherwise noted.

The normally inflated unloaded condition is such that the tire is mounted on a standard wheel rim and inflate to a standard pressure but loaded with no tire load.

The undermentioned normally inflated loaded condition is such that the tire is mounted on the standard wheel rim and inflated to the standard pressure and loaded with the standard tire load.

The standard wheel rim is a wheel rim officially approved or recommended for the tire by standards organizations, i.e. JATMA (Japan and Asia), T&RA (North America), ETRTO (Europe), TRAA (Australia), STRO (Scandinavia), ALAPA (Latin America), ITTAC (India) and the like which are effective in the area where the tire is manufactured, sold or used. The standard pressure and the standard tire load are the maximum air pressure and the maximum tire load for the tire specified by the same organization in the Air-pressure/Maximum-load Table or similar list.
For example, the standard wheel rim is the "standard rim" specified in JATMA, the "Measuring Rim" in ETRTO, the "Design Rim" in TRA or the like. The standard pressure is the "maximum air pressure" in JATMA, the "Inflation Pressure" in ETRTO, the maximum pressure given in the "Tire Load Limits at various Cold Inflation Pressures" table in TRA or the like. The standard load is the "maximum load capacity" in JATMA, the "Load Capacity" in ETRTO, the maximum value given in the above-mentioned table in TRA or the like.

The tread edges Te are the axial outermost edges of the ground contacting patch of the tire which occurs under the normally inflated loaded condition when the camber angle of the tire is zero.

The tread width TW is the width measured under the normally inflated unloaded condition, as the axial distance between the tread edges Te determined as above.

The term "sipe" means a fine groove having a width of not more than 1.5 mm inclusive of a cut having substantially no width.

### Brief Description of the Drawings

Fig. 1 is a developed partial view of the tread portion of a pneumatic tire as an embodiment of the present invention.
Fig. 2 is a top view of one oblique land region in Fig. 1.
Fig. 3 is a top view of one first oblique main groove in Fig. 1.
Fig. 4 is a developed partial view of the tread portion of a pneumatic tire as another embodiment of the present invention.
Fig. 5 is a developed partial view of the tread portion of a pneumatic tire as a comparative example.

### Description of the Preferred Embodiments

The present invention can be applied to various pneumatic tires, and suitably applied to a winter tire for passenger cars.

Taking a winter tire for passenger cars as an example, embodiments of the present invention will now be described in conjunction with accompanying drawings.

As well known in the art, a pneumatic tire comprises a tread portion 2 whose radially outer surface defines the tread, a pair of axially spaced bead portions mounted on rim seats, a pair of sidewall portions extending between the tread edges Te and the bead portions, a carcass extending between the bead portions through the tread portion and the sidewall portions, and a tread reinforcing belt disposed radially outside the carcass in the tread portion.

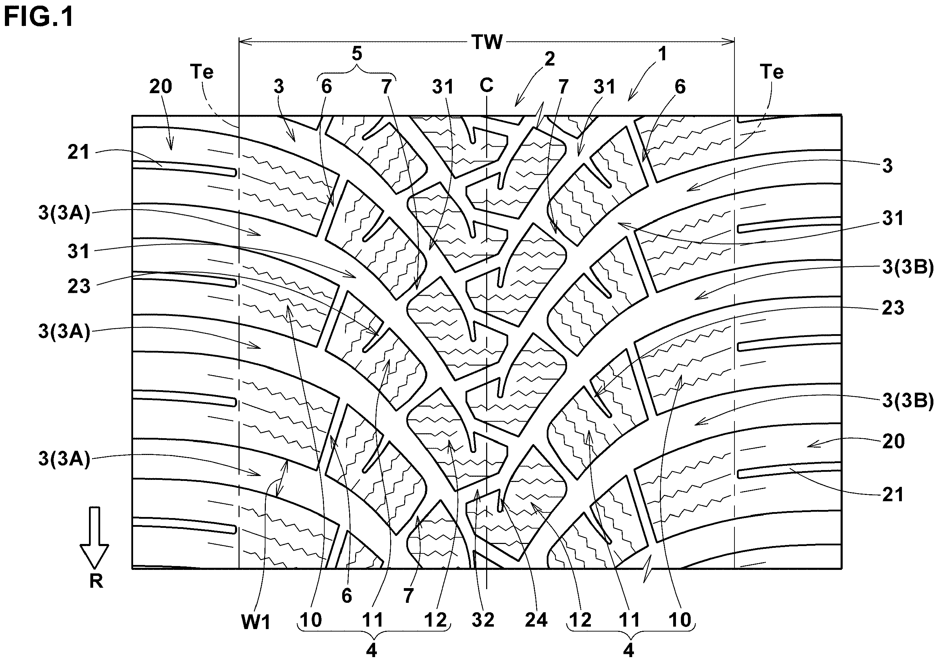

Fig. 1 shows the tread portion 2 of a pneumatic tire 1 as a first embodiment of the present invention. The tread portion 2 is provided with a directional tread pattern having an intended rotational direction R.
The rotational direction R is indicated on a sidewall portion (not shown) by characters, diagrams and the like as usual.

As shown in Fig. 1, the tread portion 2 is provided with a plurality of oblique main grooves 3.
The oblique main grooves 3 extend obliquely from tread edges Te toward the tire equator C. In this embodiment, the oblique main grooves 3 extend beyond the tire equator C and terminate without reaching the opposite tread edge Te.

With this arrangement, during running on snowy roads, the snow is compressed into the oblique main grooves 3 and generates a shearing force, and a large traction can be obtained. Further, during running on icy roads, the oblique main grooves 3 can exert the edge effect in the tire circumferential direction and the edge effect in the tire axial direction in a wide range of the tread portion 2.

In order to exert the dry performance and the on-ice/on-snow performance in a good balance, the groove widths w1 of the oblique main grooves 3 are, for example, set in a range from 6.0 to 15.0 mm, and the depths of the oblique main grooves 3 are set in a range from 5.0 to 9.5 mm, for example. However, the sizes of the oblique main grooves 3 are not limited to such specific ranges.

The tread portion 2 is further provided with vertical grooves 5 connecting between the oblique main grooves 3 adjacent in the tire circumferential direction.
The vertical grooves 5 include axially outer first vertical grooves 6 and axially inner second vertical grooves 7.

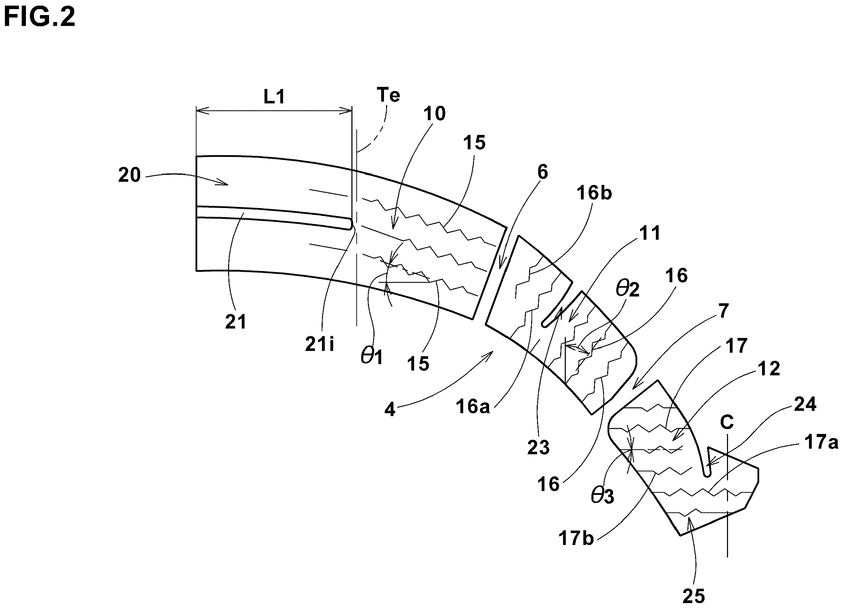

Between every two of the circumferentially adjacent oblique main grooves 3 on each side of the tire equator, an oblique land region 4 is formed. The oblique land region 4 is divided into at least a shoulder block 10 located axially outside the first vertical groove 6, and a middle block 11 located axially inside the first vertical groove 6 as shown in Fig. 2.

The shoulder block 10 is provided with a plurality of transverse sipes 15 whose angles θ1 are less than 45 degrees with respect to the tire axial direction, whereas the middle block 11 is provided with a plurality of vertical sipes 16 whose angles θ2 are less than 45 degrees with respect to the tire circumferential direction.

In this embodiment, the transverse sipes 15 and the vertical sipes 16 have zigzag configurations.

In this specification, when a sipe is provided with a zigzag or wavy configuration, the angle of such sipe is defined by the angle of the amplitude center line of the zigzag or wave of the widthwise center line of the sipe.

Such transverse sipes 15 and vertical sipes 16 can exert sufficient edge effects during running straight as well as cornering.
Further, as the lateral rigidity of the shoulder blocks 10 provided with the transverse sipes 15 is maintained, therefore, deformation during cornering is suppressed, which is useful to improve the steering stability.
The shoulder block 10 and the middle block 11 can deform in different directions from each other. Thereby, the snow in the oblique main grooves 3 and the first vertical grooves 6 is easily self-discharged during running, which is useful in suppressing over a long time the degradation of the on-snow performance due to snow stuffed in the grooves.

In order to effectively derive the above described advantages effects, it is preferred that the angle θ1 of the transverse sipes 15 is not less than 10 degrees, more preferably not less than 15 degrees, and preferably not greater than 30 degrees, more preferably not greater than 25 degrees. Such transverse sipes 15 can exert not only the edge effect in the tire circumferential direction but also the edge effect in the tire axial direction in a good balance.

It is preferred that the transverse sipes 15 each have two ends, one of which is connected with the first vertical groove 6 and the other of which is terminated at a position axially inside the tread edge Te. Such transverse sipes 15 are helpful in suppressing uneven wear of the shoulder blocks 10 near the tread edges Te.

It is preferred that the transverse sipe 15 extends in a zigzag manner. In such transverse sipe 15, the sipe's side walls engage each other when in the ground contacting patch of the tire. Therefore, the apparent rigidity of the shoulder block 10 is increased to improve the steering stability.

Each of the transverse sipes 15 is not connected to other transverse sipes 15, and the transverse sipes 15 are preferably arranged in parallel with each other.

In this embodiment, the ground contacting top surfaces of the shoulder blocks 10 are provided with only the above-described plurality of the transverse sipes 15 and no other sipes are provided in order to improve the wear resistance of the shoulder blocks 10.

The shoulder block 10 has a buttress surface 20 (or axially outer lateral/side surface) extending axially outwardly from the tread edge Te.
Each of the shoulder blocks 10 is provided in the buttress surface 20 with a buttress transverse groove 21.
The buttress transverse groove 21 in this embodiment extends in the tire axial direction at the center position of the shoulder block 10 in the tire circumferential direction.
Such buttress transverse grooves 21 can improve the wandering performance of the tire without degrading the steering stability.

It is preferred that the buttress transverse groove 21 has an axially inner end 21i (namely, radially outer end) located axially outside the tread edge Te as shown in Fig. 1 (namely, located radially inside the tread edge). when a large ground contact pressure is applied to the shoulder block 10 for example when braking on a snowy road and so on, a part of the buttress transverse groove 21 can contact with the ground, and the buttress transverse groove 21 can exert edge effect. However, during normal driving, the buttress transverse groove 21 does not contact with the ground, and the rigidity of the shoulder block 10 can be maintained to provide steering stability.

In order to effectively derive the above-described effects, it is preferred that a length L1 of the buttress transverse groove 21 in the tire axial direction in the developed view as shown in Fig. 1 is set in a range from 0.15 to 0.25 times the tread width TW.

In this embodiment, the middle block 11 defined between the first vertical groove 6 and the second vertical groove 7 is preferably provided with the vertical sipes 16 extending in a zigzag manner as with the transverse sipes 15.
The vertical sipes 16 include a first vertical sipe 16a connecting between the adjacent oblique main grooves 3 and a second vertical sipe 16b having one end connected with one of the oblique main grooves 3 and the other end terminating within the middle block 11. Such second vertical sipe 16b helps to maintain the rigidity of the middle block 11.

The angle θ2 of the vertical sipes 16 with respect to the tire circumferential direction is preferably not less than 35 degrees, more preferably not less than 33 degrees, and preferably not greater than 40 degrees, more preferably not greater than 37 degrees. Such vertical sipes 16 can exert the edge effect in the tire axial direction and the edge effect in the tire circumferential direction in a good balance.

Each of the vertical sipes 16 is not connected with other vertical sipes 16. Preferably, the vertical sipes 16 are arranged in parallel with each other.
In this embodiment, the middle blocks 11 are provided with only the above-described plurality of the vertical sipes 16 and no other sipes are provided in order to improve the wear resistance of the middle blocks 11.

Preferably, the middle blocks 11 are each provided with a middle narrow groove 23 having an open end at one of the oblique main grooves and a closed end terminates within the middle block 11.
It is preferable that, on an extended line drawn from the closed end beyond the open end of the middle narrow groove 23, a next second vertical groove 7 is located as shown in Fig. 1. Such middle narrow groove 23 can form a large snow block in cooperation with the second vertical groove 7 and the oblique main groove 3 therebetween, and thereby it is possible to provide a large shearing force by the snow block.

As shown in Fig. 2, the oblique land region 4 in this embodiment comprises a crown block 12 axially inside the second vertical groove 7.

The crown block 12 is provided with a plurality of transverse sipes 17 whose angle θ3 with respect to the tire axial direction is less than 45 degrees. Preferably, the angle θ3 is set to be smaller than angle θ1, and preferably set to be not greater than 10 degrees.
In this embodiment, the transverse sipes 17 has zigzag configurations.

As described above, the shoulder blocks 10 and the crown blocks 12 are provided with the transverse sipes 15 and 17 and the middle blocks 11 are provided with the vertical sipes 16 in this embodiment. Thereby, the shoulder blocks 10 and the crown blocks 12 more tend to deform in different directions. Thus, snow compressed into the adjacent grooves can be effectively discharged, therefore, it is possible to further improve the on-snow performance.

The transverse sipes 17 provided in each of the crown blocks 12 include
a first transverse sipe 17a extending across the entire width of the crown block 12, and
a second transverse sipe 17b whose one end is connected with one of the oblique main grooves 3 and the other end terminates within the crown block 12.

In this embodiment, the crown block 12 is preferably provided with a crown narrow groove 24 whose one end is connected with one of the oblique main grooves 3 and the other end terminates within the crown block 12. Such crown narrow groove can form a snow bock having a complex shape around the tire equator C where the ground contacting pressure is relatively high, and a large shearing force can be obtained from the snow bock.

It is preferable that the axially inner end portion 25 of the crown block 12 across the tire equator C have an angled corner which juts out toward one side in the tire circumferential direction as shown in Fig. 1 to have a v-shaped edge convexed toward the above-said one side in the tire circumferential direction. Such edge of the corner sticks into the snow on the road surface during running on a snowy road, and a large reaction force is obtained.

Next, an example of the arrangement of the oblique main grooves 3 and the vertical grooves 5 will be described. In this example, as shown in Fig. 1, the oblique main grooves 3 include first oblique main grooves 3A extending from one of the tread edges Te (one on the left side in Fig. 1) toward the tire equator C, and second oblique main grooves 3B extending from the other tread edge Te (one on the right side in Fig. 1) toward the tire equator C.

The first oblique main grooves 3A each extend axially inwardly from one of the tread edges Te beyond the tire equator C so as to connect with one of the second oblique main grooves 3B. The second oblique main grooves 3B each extend axially inwardly from the other tread edge Te beyond the tire equator C so as to connect with one of the first oblique main grooves 3A. As a result, on the tire equator C, the first oblique main grooves 3A and the second oblique main grooves 3B are arranged alternately in the tire circumferential direction.

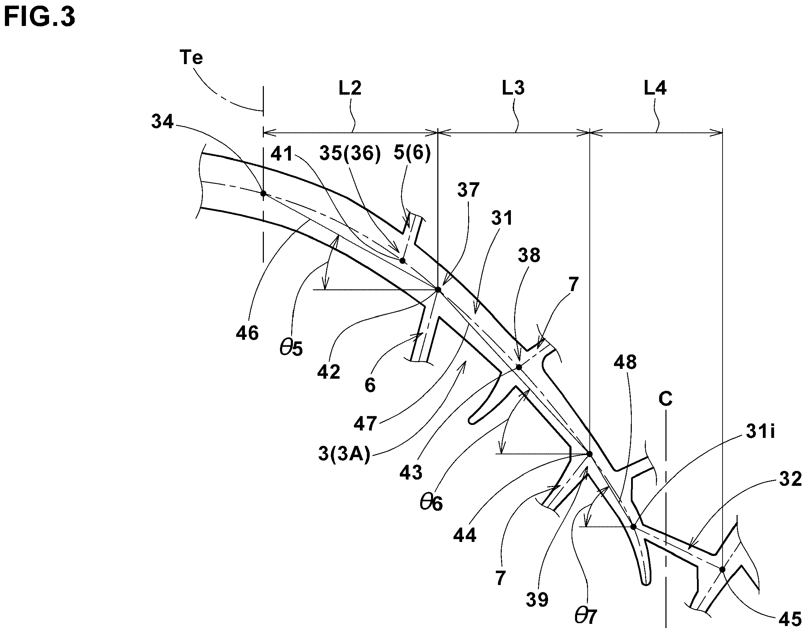

In this example, it is preferable that the shape of the first oblique main groove 3A and the shape of the second oblique main groove 3B are line symmetrical about the tire equator C. Fig. 3 shows the shape of one of the first oblique main grooves 3A in this embodiment. As shown, the oblique main groove 3 (3A, 3B) comprises an axially inner portion 32 and an axially outer portion 31, wherein the axially inner portion 32 extends across the tire equator C and obliquely with respect to the tire axial direction, and the axially outer portion 31 extends axially outwardly from one end of the axially inner portion 32 to the tread edge Te.

The angle θ4 (not shown) with respect to the tire axial direction, of the axially outer portion 31 is gradually increased from the tread edge Te toward the axially inner portion 32 (in this example, to the axially inner portion 32). For example, the angle θ4 is set in a range from 15 to 65 degrees,

In this specification, the angle of a groove means the angle of a widthwise center line of the groove.

The inner portion 32 configured as such can exert large edge effects in the tire circumferential direction and in the tire axial direction. The outer portion 31 configured as such can guide ice and mud around the tire equator C effectively toward the tread edge Te when running on a road covered with, for example, slush or half-melted snow and mud, therefore, it is possible to effectively improve the on-ice/on-snow performance.

In order to effectively derive the above-described effects, it is preferred that the groove width of the axially outer portion 31 is gradually increased toward the tread edge Te.

As shown in Fig. 1, the above-mentioned first vertical groove 6 extends from one to the other of the outer portions 31 of the adjacent oblique main grooves 3.
The first vertical groove 6 in this example is inclined with respect to the tire circumferential direction.
The second vertical groove 7 in this example is inclined with respect to the tire circumferential direction to the same direction as the first vertical groove 6, and extends from one to the other of the outer portions 31 of the adjacent oblique main grooves 3.
It is preferred that, with respect to the tire circumferential direction, the inclination angle of the second vertical groove 7 is larger than that of the first vertical groove 6. In this embodiment, the first vertical groove 6 is disposed in an axially outside half area of a half tread portion on one side of the tire equator, and the second vertical groove 7 is disposed in an axially inside half area of the half tread portion.

As shown in Fig. 3, each of the oblique main grooves 3 has junctions 35 with the vertical grooves 5 (6,7), therefore, when running on snowy roads, snow block formed in the vicinities of the junctions 35 can generate a large shearing force. In this embodiment, the junctions 35 include:
a first junction 36 which is that with the first vertical groove 6 on one side (upper side in Fig. 3) in the tire circumferential direction,
a second junction 37 which is that with the first vertical groove 6 on the other side (lower side in Fig. 3) in the tire circumferential direction,
a third junction 38 which is that with the second vertical groove 7 on the above-said one side (upper side in Fig. 3) in the tire circumferential direction, and
a fourth junction 39 which is that with the second vertical groove 7 on the above-said other side (lower side in Fig. 3) in the tire circumferential direction.

The second junction 37 is located axially inside the first junction 36. The fourth junction 39 is located axially inside the third junction 38.
The first junction 36 includes a first intersecting point 41 of the widthwise center lines of the concerned oblique main groove 3 and first vertical groove 6.
The second junction 37 includes a second intersecting point 42 of the widthwise center lines of the concerned oblique main groove 3 and first vertical groove 6.
The third junction 38 includes a third intersecting point 43 of the widthwise center lines of the concerned oblique main groove 3 and second vertical groove 7.
The fourth junction 39 includes a fourth intersecting point 44 of the widthwise center lines of the concerned oblique main groove 3 and second vertical groove 7.

Preferably, the first axial distance L2 between the second intersecting point 42 and the adjacent tread edge Te is set in a range from 13.8 % to 16.9 % of the tread width TW;
the second axial distance L3 between the second intersecting point 42 and the fourth intersecting point 44 is set in a range from 11.8 % to 14.9 % of the tread width TW; and
the third axial distance L4 between the fourth intersecting point 44 and a fifth intersecting point 45 is set in a range from 9.7 % to 12.8 % of the tread width TW, wherein the fifth intersecting point 45 is of the widthwise center line of the concerned oblique main groove 3 in the axially inner portion 32 and the widthwise center line of other oblique main groove with which the above-said inner portion is connected.
Thereby, the junctions 35 are distributed moderately in the longitudinal direction of the oblique main groove 3, and the oblique main groove 3 can derive a large shearing force of snow block from its entire length.

The angle θ5 with respect to the tire axial direction of a first straight line 46, which is drawn between the second intersecting point 42 and the axially outer end 34 of the oblique main groove 3 at the tread edge Te, is preferably set in a range from 25 to 35 degrees.
The angle θ6 with respect to the tire axial direction of a second straight line 47, which is drawn between the second intersecting point 42 and the fourth intersecting point 44, is preferably set in a range from 45 to 55 degrees.
The angle θ7 with respect to the tire axial direction of a third straight line 48 is preferably set in a range from 55 to 65 degrees, which line is drawn between the fourth intersecting point 44 and an inner end 31i of the axially outer portion 31 (namely, the intersecting point 31i of the axially outer portion 31 and the axially inner portion 32 on the widthwise center line).
The oblique main groove 3 configured as such can discharge ice and mud effectively when running on a road covered with the sherbet-like soft snow, therefore, excellent on-ice/on-snow performance can be obtained.

In this embodiment, it is desirable that the tread portion 2 is not provided with a straight groove extending continuously and circumferentially of the tire as shown in Fig. 1. This is because such groove does not make a contribution to the improvement in the traction performance on icy and snowy ground.

In this embodiment, namely, in the case of a pneumatic tire for winter season, it is preferable that the tread portion 2 is provided with a land ratio Lr of not less than 55 %, more preferably not less than 65 %, but preferably not greater than 75 %, more preferably not greater than 70 % in order to improve the steering stability and the on-ice/on-snow performance in a good balance.

Incidentally, the "land ratio" is a ratio Sb/Sa of the total ground contacting area Sb to the overall area Sa (inclusive of the grooved and siped area) of the tread portion 2.

From a similar point of view, it is preferred that the tread rubber forming the tread portion 2 is provided with a hardness Ht of not less than 45 degrees, more preferably not less than 55 degrees, but preferably not greater than 70 degrees, more preferably not greater than 65 degrees when measured as a type-A durometer hardness according to Japanese Industrial Standard JIS K6253 at a temperature of 23 degrees Celsius.

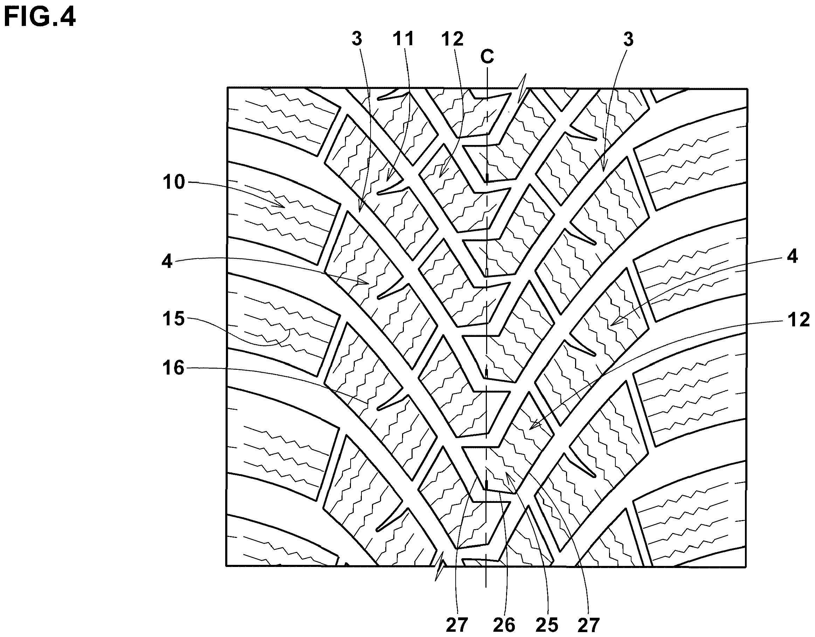

Fig. 4 shows the tread portion 2 of a pneumatic tire 1 as a second embodiment of the present invention. The second embodiment is almost same as the first embodiment except for the configuration of the crown block 12 especially in the vicinity of the tire equator C. More specifically, the crown narrow groove 24 is omitted, and the axially inner end portion 25 of the crown block 12 extending across the tire equator C is bent from the axially outer rest portion so as to have
a transverse edge 26 extending substantially in the tire axial direction,
a pair of oblique edges 27 extending obliquely from both ends of the transverse edge 26 so that the axial width between the oblique edges 27 gradually increases toward one side in the tire circumferential direction, and
a transverse edge extending substantially in the tire axial direction on the opposite side of the transverse edge 26. Thus, as shown in Fig.4, the axially inner end portion 25 has a generally parallelogram shape, and the axially outer rest portion also has a generally parallelogram shape. The transverse edges each extend at an angle not greater than 10 degrees with respect to the tire axial direction. Such the crown block 12 can exert excellent on-ice/on-snow performance as the transverse edges forms a hard snow block and the oblique edges push the snow block aside, generating large reaction force.

while detailed description has been made of preferable embodiments of the present invention, the present invention can be embodied in various forms without being limited to the illustrated embodiments.

### Comparison tests

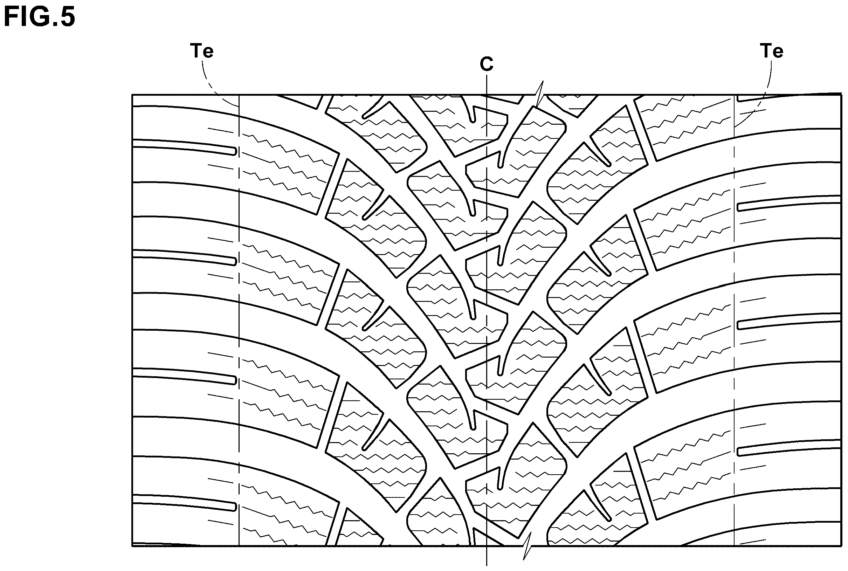

Based on the tread pattern shown in Fig. 1, pneumatic tires of size 195/65R15 (Rim size 15x6.0) were experimentally manufactured as working examples Ex1-Ex15.
Further, a pneumatic tire of the same tire size having the tread pattern shown in Fig. 5 was experimentally manufactured as a comparative example Ref1, wherein all the blocks were provided with transverse sipes.
The specifications of these test tires are listed in Table 1.
The following are specifications common to all the test tires. Otherwise the specifications of the test tires were the same.
tread rubber hardness: 65
land ratio: 68 %
tread width: 140 mm
groove depth of oblique main grooves: 8.5 mm
The test tires were tested for the brake performance and the cornering performance on an icy and snowy road surface, and the cornering performance on a dry road surface as follows, using a test car (2000 cc front wheel drive passenger car) provided on all wheels with test tires inflated to 200 kPa.

### <Brake performance and cornering performance on icy/snowy road>

The brake performance and the cornering performance were evaluated by a teat driver while the test car was driven on an icy and snowy road covered with snow and ice.
The results are indicated in Table 1 by an evaluation point based on comparative example Ref1 being 100, wherein the larger the numerical value, the better the performance.

### < Cornering performance on dry road >

The cornering performance was evaluated by the driver while the test car was driven on a dry road surface of a circuit course.
The results are indicated in table 1 by an evaluation point based on comparative example Ref1 being 100, wherein the larger the numerical value, the better the steering stability on the dry road surface.

**Table 1**

| Tire | Ref 1 | Ex1 | Ex2 | Ex3 | Ex4 | Ex5 | Ex6 | Ex7 | Ex8 | Ex9 | Ex10 | Ex11 | Ex12 | Ex13 | Ex14 | Ex15 |
|---|---|---|---|---|---|---|---|---|---|---|---|---|---|---|---|---|
| angle θ1 (deg.) | 20 | 20 | 10 | 15 | 25 | 30 | 20 | 20 | 20 | 20 | 20 | 20 | 20 | 20 | 20 | 20 |
| angle θ2 (deg.) | 90 | 35 | 35 | 35 | 35 | 35 | 30 | 33 | 37 | 40 | 35 | 35 | 35 | 35 | 35 | 35 |
| angle θ3 (deg.) | 0 | 0 | 0 | 0 | 0 | 0 | 0 | 0 | 0 | 0 | 45 | 90 | 0 | 0 | 0 | 0 |
| buttress transverse groove, (P)resence/(A)bsence | P | P | P | P | P | P | P | P | P | P | P | P | A | P | P | P |
| length L1/TW | 0.2 | 0.2 | 0.2 | 0.2 | 0.2 | 0.2 | 0.2 | 0.2 | 0.2 | 0.2 | 0.2 | 0.2 | - | 0.15 | 0.25 | 0.2 |
| middle narrow groove, (P)resence/(A)bsence | P | P | P | P | P | P | P | P | P | P | P | P | P | P | P | A |
| brake performance (on ice/snow) | 100 | 103 | 104 | 103 | 102 | 101 | 101 | 102 | 103 | 103 | 102 | 101 | 101 | 103 | 103 | 102 |
| cornering performance (on ice/snow) | 100 | 108 | 104 | 105 | 108 | 108 | 108 | 108 | 106 | 105 | 107 | 105 | 105 | 107 | 108 | 106 |
| cornering performance (dry) | 100 | 104 | 102 | 103 | 104 | 104 | 105 | 104 | 102 | 102 | 105 | 106 | 104 | 104 | 102 | 104 |

From the test results, it was confirmed that the working example tires according to the present invention were improved in the brake performance and the cornering performance on icy and snowy roads in a good balance, and improved in the cornering performance on dry roads as well.

### Reference Signs List

- 2: tread portion
- 3: oblique main groove
- 4: oblique land region
- 6: first vertical groove
- 10: shoulder block
- 11: middle block
- 15: transverse sipe
- 16: vertical sipe

## Claims

1. A pneumatic tire (1) comprising:
a tread portion (2) provided with a plurality of oblique main grooves (3) extending obliquely from tread edges (Te) toward the tire equator (C) so as to define oblique land regions (4) between the oblique main grooves (3) adjacent in the tire circumferential direction,
the oblique land regions (4) each divided by a first vertical groove (6) connecting between the adjacent oblique main grooves (3) into a shoulder block (10) located axially outside the first vertical groove (6) and a middle block (11) located axially inside the first vertical groove (6),
wherein
said shoulder block (10) is provided with a plurality of transverse sipes (15) whose angles (θ1) with respect to the tire axial direction are less than 45 degrees, and no other sipes are provided within the shoulder block (10),
said middle block (11) is provided with a plurality of vertical sipes (16) whose angles (θ2) with respect to the tire circumferential direction are less than 45 degrees, and no other sipes are provided within the middle block (11),
each of the oblique land regions (4) is provided with a second vertical groove (7) connecting between the adjacent oblique main grooves (3) and positioned between the first vertical groove (6) and the tire equator (C) so as to define a crown block (12) on the axially inside of the second vertical groove (7), and
said crown block (12) comprises an axially inner portion (25) having a transverse edge (26) extending substantially in the tire axial direction, and a pair of oblique edges (27) extending from both ends of the transverse edge (26) obliquely so that the axial width between the oblique edges (27) gradually increases toward one side in the tire circumferential direction.

2. The pneumatic tire (1) according to claim 1, wherein
the transverse sipes (15) in said shoulder block (10) each have two ends, one of which is connected with said first vertical groove (6) and the other of which is terminated at a position axially inside the adjacent tread edge (Te).

3. The pneumatic tire (1) according to claim 1 or 2, wherein
said shoulder block (10) has a buttress surface (20), which extends axially outwardly from the tread edge (Te), and in which a buttress transverse groove (21) is disposed.

4. The pneumatic tire (1) according to claim 3, wherein
said buttress transverse groove (21) extends in the tire axial direction at a center position of the shoulder block (10) in the tire circumferential direction.

5. The pneumatic tire (1) according to any one of claims 1-4, wherein
said middle block (11) is provided with a middle narrow groove (23) one end of which is connected with one of the oblique main grooves (3) and the other end of which terminates within the middle block (11).

6. The pneumatic tire (1) according to any one of claims 1-5, wherein
the crown block (12) is provided with a crown narrow groove (24) one end of which is connected with one of the oblique main grooves (3) and the other end of which terminates within the crown block (12).

7. The pneumatic tire (1) according to claim 6, wherein
in each of the oblique land regions (4), said first vertical groove (6) and said second vertical groove (7) are inclined with respect to the tire circumferential direction to the same direction, and the inclination angle of the second vertical groove (7) with respect to the tire circumferential direction is larger than the inclination angle of the first vertical groove (6) with respect to the tire circumferential direction.

8. The pneumatic tire (1) according to claim 6, wherein
said crown block (12) is provided with a plurality of transverse sipes (17) whose angles (θ3) with respect to the tire axial direction are less than 45 degrees.

9. The pneumatic tire (1) according to any one of claims 1-8, wherein
angles (θ1, θ3) of the transverse sipes (15, 17) with respect to the tire axial direction are in a range between 10 and 30 degrees, and
angles (θ2) of the vertical sipes with (16) respect to the tire circumferential direction range are in a range between 25 and 40 degrees.

10. The pneumatic tire (1) according to any one of claims 1-9, wherein
the tread portion (2) is provided on each side of the tire equator (C) with the oblique land regions (4) defined as extending from the tread edge (Te) toward the tire equator (C) while curving toward one tire circumferential direction, wherein each of said oblique land regions (4) is provided in its axially inner portion with a protruding part extending axially of the tire beyond the tire equator (C), whereby, on the tire equator (C), the protruding part of the oblique land regions (4) on one side of the tire equator (C) alternates with the protruding part of the oblique land regions (4) on the other side of the tire equator (C),
said axially inner crown block (12) includes said protruding part, and
said axially inner crown block (12) is provided with a plurality of transverse sipes (17) whose angles (θ3) with respect to the tire axial direction are less than 45 degrees or alternatively more than 45 degrees.

11. The pneumatic tire (1) according to claim 1 or 10, wherein
the tread portion (2) is not provided with a straight groove extending continuously in the tire circumferential direction.

## Patentansprüche

1. Luftreifen (1), umfassend:
einen Laufflächenabschnitt (2), der mit mehreren schrägen Hauptrillen (3) versehen ist, die sich von Laufflächenrändern (Te) schräg in Richtung des Reifenäquators (C) erstrecken, um dadurch schräge Landbereiche (4), die in der Umfangsrichtung des Reifens benachbart sind, zwischen den schrägen Hauptrillen (3) zu definieren,
wobei die schrägen Landbereiche (4) jeweils durch eine erste vertikale Rille (6), die eine Verbindung zwischen den benachbarten schrägen Hauptrillen (3) herstellt, in einen Schulterblock (10), der axial außerhalb der ersten vertikalen Rille (6) angeordnet ist, und einen Mittelblock (11), der axial innerhalb der ersten vertikalen Rille (6) angeordnet ist, geteilt sind, wobei
der Schulterblock (10) mit mehreren Querfeinschnitten (15), deren Winkel (θ1) bezogen auf die axiale Richtung des Reifens kleiner als 45 Grad sind, versehen ist und keine anderen Feinschnitte innerhalb des Schulterblocks (10) vorgesehen sind,
der Mittelblock (11) mit mehreren vertikalen Feinschnitten (16), deren Winkel (θ2) bezogen auf die Umfangsrichtung des Reifens kleiner als 45 Grad sind, versehen ist und keine anderen Feinschnitte innerhalb des Mittelblocks (11) vorgesehen sind,
jeder der schrägen Landbereiche (4) mit einer zweiten vertikalen Rille (7) versehen ist, die eine Verbindung zwischen den benachbarten schrägen Hauptrillen (3) herstellt und zwischen der ersten vertikalen Rille (6) und dem Reifenäquator (C) angeordnet ist, um dadurch einen Kronenblock (12) auf der axialen Innenseite der zweiten vertikalen Rille (7) zu definieren, und
der Kronenblock (12) einen axial inneren Abschnitt (25) mit einem quer verlaufenden Rand (26), der sich im Wesentlichen in der axialen Richtung des Reifens erstreckt, und ein Paar schräge Ränder (27) umfasst, die sich von beiden Enden des quer verlaufenden Randes (26) derart schräg erstrecken, dass die axiale Breite zwischen den schrägen Rändern (27) in Richtung einer Seite in der Umfangsrichtung des Reifens allmählich zunimmt.

2. Luftreifen (1) nach Anspruch 1, wobei
die Querfeinschnitte (15) in dem Schulterblock (10) jeweils zwei Enden aufweisen, von denen eines mit der ersten vertikalen Rille (6) verbunden ist und von denen das andere an einer Position axial innerhalb des benachbarten Laufflächenrandes (Te) endet.

3. Luftreifen (1) nach Anspruch 1 oder 2, wobei
der Schulterblock (10) eine Stützpfeilerfläche (20) aufweist, welche sich von dem Laufflächenrand (Te) axial nach außen erstreckt und in welcher eine Stützpfeiler-Querrille (21) angeordnet ist.

4. Luftreifen (1) nach Anspruch 3, wobei
sich die Stützpfeiler-Querrille (21) in der axialen Richtung des Reifens an einer bezüglich der Umfangsrichtung des Reifens zentralen Position des Schulterblocks (10) erstreckt.

5. Luftreifen (1) nach einem der Ansprüche 1 - 4, wobei
der Mittelblock (11) mit einer schmalen Mittelrille (23) versehen ist, von welcher ein Ende mit einer der schrägen Hauptrillen (3) verbunden ist und von welcher das andere Ende innerhalb des Mittelblocks (11) endet.

6. Luftreifen (1) nach einem der Ansprüche 1 - 5, wobei
der Kronenblock (12) mit einer schmalen Kronenrille (24) versehen ist, von welcher ein Ende mit einer der schrägen Hauptrillen (3) verbunden ist und von welcher das andere Ende innerhalb des Kronenblocks (12) endet.

7. Luftreifen (1) nach Anspruch 6, wobei
in jedem der schrägen Landbereiche (4) die erste vertikale Rille (6) und die zweite vertikale Rille (7) bezogen auf die Umfangsrichtung des Reifens in die gleiche Richtung geneigt sind und der Neigungswinkel der zweiten schrägen Rille (7) bezogen auf die Umfangsrichtung des Reifens größer als der Neigungswinkel der ersten schrägen Rille (6) bezogen auf die Umfangsrichtung des Reifens ist.

8. Luftreifen (1) nach Anspruch 6, wobei
der Kronenblock (12) mit mehreren Querfeinschnitten (17) versehen ist, deren Winkel (θ3) bezogen auf die axiale Richtung des Reifens kleiner als 45 Grad sind.

9. Luftreifen (1) nach einem der Ansprüche 1 - 8, wobei
Winkel (θ1, θ3) der Querfeinschnitte (15, 17) bezogen auf die axiale Richtung des Reifens in einem Bereich zwischen 10 und 30 Grad liegen und
Winkel (θ2) der vertikalen Feinschnitte (16) bezogen auf die Umfangsrichtung des Reifens in einem Bereich zwischen 25 und 40 Grad liegen.

10. Luftreifen (1) nach einem der Ansprüche 1 - 9, wobei
der Laufflächenabschnitt (2) auf jeder Seite des Reifenäquators (C) mit den schrägen Landbereichen (4) versehen ist, die derart definiert sind, dass sie sich von dem Laufflächenrand (Te) in Richtung des Reifenäquators (C) erstrecken, während sie in Richtung einer Umfangsrichtung des Reifens gekrümmt sind, wobei jeder der schrägen Landbereiche (4) in seinem axial inneren Abschnitt mit einem hervorstehenden Teil versehen ist, der sich in der axialen Richtung des Reifens über den Reifenäquator (C) hinaus erstreckt, wodurch an dem Reifenäquator (C) der hervorstehende Teil der schrägen Landbereiche (4) auf einer Seite des Reifenäquators (C) mit dem hervorstehenden Teil der schrägen Landbereiche (4) auf der anderen Seite des Reifenäquators (C) abwechselt,
der axial innere Kronenblock (12) den hervorstehenden Teil umfasst und
der axial innere Kronenblock (12) mit mehreren Querfeinschnitten (17) versehen ist, deren Winkel (θ3) bezogen auf die axiale Richtung des Reifens kleiner als 45 Grad oder alternativ größer als 45 Grad ist.

11. Luftreifen (1) nach einem der Ansprüche 1 oder 10, wobei der Laufflächenabschnitt (2) nicht mit einer geraden Rille versehen ist, die sich kontinuierlich in der Umfangsrichtung des Reifens erstreckt.

## Revendications

1. Bandage pneumatique (1) comprenant :
une portion formant bande de roulement (2) dotée d'une pluralité de rainures principales obliques (3) s'étendant en oblique depuis des bords de roulement (Te) en direction de l'équateur de pneumatique (C) de manière à définir des régions en relief obliques (4) entre les rainures principales obliques (3) adjacentes dans la direction circonférentielle du pneumatique,
les régions en relief obliques (4) étant divisées chacune par une première rainure verticale (6) assurant une connexion entre les rainures principales obliques adjacentes (3) jusque dans un bloc d'épaulement (10) situé axialement à l'extérieur de la première rainure verticale (6) et un bloc médian (11) situé axialement à l'intérieur de la première rainure verticale (6),
dans lequel
ledit bloc d'épaulement (10) est doté d'une pluralité de fentes transversales (15) dont les angles (θ1) par rapport à la direction axiale du pneumatique sont inférieurs à 45°, et il n'est prévu aucune autre fente à l'intérieur du bloc d'épaulement (10),
ledit bloc médian (11) est doté d'une pluralité de fentes verticales (16) dont les angles (θ2) par rapport à la direction circonférentielle du pneumatique sont inférieurs à 45°, et il n'est prévu aucune autre fente à l'intérieur du bloc médian (11),
chacune des régions en relief obliques (4) est dotée d'une seconde rainure verticale (7) assurant une connexion entre les rainures principales obliques adjacentes (3) et positionnée entre la première rainure verticale (6) et l'équateur de pneumatique (C) de manière à définir un bloc de couronne (12) sur l'intérieur, en sens axial, de la seconde rainure verticale (7), et
ledit bloc de couronne (12) comprend une portion axialement intérieure (25) ayant un bord transversal (26) s'étendant sensiblement dans la direction axiale du pneumatique, et une paire de bornes obliques (27) s'étendant depuis les deux extrémités du bord transversal (26) en oblique de telle sorte que la largeur axiale entre les bornes obliques (27) augmente progressivement en direction d'un côté dans la direction circonférentielle du pneumatique.

2. Bandage pneumatique (1) selon la revendication 1, dans lequel
les fentes transversales (15) dans ledit bloc d'épaulement (10) ont chacune deux extrémités, dont l'une est connectée à ladite première rainure verticale (6), et dont l'autre se termine à une position axialement à l'intérieur du bord de roulement adjacent (Te).

3. Bandage pneumatique (1) selon la revendication 1 ou 2, dans lequel
ledit bloc d'épaulement (10) présente une surface de contrefort (20), qui s'étend axialement vers l'extérieur depuis le bord de roulement (Te) et dans laquelle est disposée une rainure transversale de contrefort (21).

4. Bandage pneumatique (1) selon la revendication 3, dans lequel
ladite rainure transversale de contrefort (21) s'étend dans la direction axiale du pneumatique à une position centrale du bloc d'épaulement (10) dans la direction circonférentielle du pneumatique.

5. Bandage pneumatique (1) selon l'une quelconque des revendications 1 à 4, dans lequel
ledit bloc médian (11) est doté d'une rainure étroite médiane (23) dont une extrémité est connectée à l'une des rainures principales obliques (3) et dont l'autre extrémité se termine à l'intérieur du bloc médian (11).

6. Bandage pneumatique (1) selon l'une quelconque des revendications 1 à 5, dans lequel
le bloc de couronne (12) est doté d'une rainure étroite de couronne (24) dont une extrémité est connectée à l'une des rainures principales obliques (3) et dont l'autre extrémité se termine à l'intérieur du bloc de couronne (12).

7. Bandage pneumatique (1) selon la revendication 6, dans lequel
dans chacune des régions en relief obliques (4), ladite première rainure verticale (6) et ladite seconde rainure verticale (7) sont inclinées par rapport à la direction circonférentielle du pneumatique vers la même direction, et l'angle d'inclinaison de la seconde rainure verticale (7) par rapport à la direction circonférentielle du pneumatique est plus élevé que l'angle d'inclinaison de la première rainure verticale (6) par rapport à la direction circonférentielle du pneumatique.

8. Bandage pneumatique (1) selon la revendication 6, dans lequel
ledit bloc de couronne (12) est doté d'une pluralité de fentes transversales (17) dont les angles (θ3) par rapport à la direction axiale du pneumatique sont inférieurs à 45°.

9. Bandage pneumatique (1) selon l'une quelconque des revendications 1 à 8, dans lequel
les angles (θ1, θ3) des fentes transversales (15, 17) par rapport à la direction axiale du pneumatique sont dans une plage entre 10 et 30 degrés, et
les angles (θ2) des fentes verticales (16) par rapport à la direction circonférentielle du pneumatique sont dans une plage entre 25 et 40 degrés.

10. Bandage pneumatique (1) selon l'une quelconque des revendications 1 à 9, dans lequel
la portion formant bande de roulement (2) est dotée, sur chaque côté de l'équateur de pneumatique (C), des régions en relief obliques (4) définies comme s'étendant depuis le bord de roulement (Te) en direction de l'équateur de pneumatique (C) tout en étant incurvées vers une direction circonférentielle du pneumatique, dans lequel chacune desdites régions en relief obliques (4) est dotée dans sa portion axialement intérieure d'une partie en projection qui s'étend axialement par rapport au pneumatique au-delà de l'équateur de pneumatique (C), de sorte que, sur l'équateur de pneumatique (C), la partie en projection des régions en relief obliques (4) sur un côté de l'équateur de pneumatique (C) alterne avec la partie en projection des régions en relief obliques (4) sur l'autre côté de l'équateur de pneumatique (C),
ledit bloc de couronne axialement intérieur (12) inclut ladite partie en projection, et
ledit bloc de couronne axialement intérieur (12) est doté d'une pluralité de fentes transversales (17) dont les angles (θ3) par rapport à la direction axiale du pneumatique sont inférieurs à 45°, ou sont en variante supérieurs à 45°.

11. Bandage pneumatique (1) selon la revendication 1 ou 10, dans lequel
la portion formant bande de roulement (2) n'est pas dotée d'une rainure rectiligne s'étendant en continu dans la direction circonférentielle du pneumatique.
